# EUROPÄISCHE PATENTSCHRIFT

(11) **EP 0 837 980 B1**
(45) Veröffentlichungstag und Bekanntmachung des Hinweises auf die Patenterteilung: **09.12.1998**
(21) Anmeldenummer: 96922016.9
(22) Anmeldetag: 19.06.1996
(51) Int. Cl.: F01N 3/02

(54) **VORRICHTUNG ZUR REINIGUNG VON ABGAS EINER GEMISCHVERDICHTENDEN VERBRENNUNGSKRAFTMASCHINE**
DEVICE FOR PURIFYING WASTE GAS FROM A MIXTURE-COMPRESSING INTERNAL COMBUSTION ENGINE
DISPOSITIF DE PURIFICATION DES GAZ D'ECHAPPEMENT D'UN MOTEUR A COMBUSTION INTERNE A COMPRESSION DU MELANGE

(30) Priorität: 12.07.1995 DE 19525134
(43) Veröffentlichungstag der Anmeldung: 29.04.1998
(73) Patentinhaber: Firma Carl Freudenberg, 69469 Weinheim (DE)
(72) Erfinder: Meinig, Uwe, D-69469 Weinheim (DE); Spies, Karl-Heinrich, Dr., D-69488 Birkenau (DE); Schweikert, Willi, D-69123 Heidelberg (DE)
(86) Internationale Anmeldenummer: EP9602642
(87) Internationale Veröffentlichungsnummer: WO9703277

(56) Entgegenhaltungen:
- EP-A- 0 283 240
- EP-A- 0 304 762
- EP-A- 0 502 826
- WO-A-87/07324
- DE-A- 3 614 812
- DE-A- 4 314 238

## Beschreibung

Die Erfindung betrifft eine Vorrichtung zur Reinigung von Abgas einer gemischverdichtenden Verbrennungskraftmaschine gemäß dem Oberbegriff des Anspruchs 1.

Aus der EP-A-0 502 826 ist eine Vorrichtung zur Reinigung von Abgas einer gemischverdichtenden Verbrennungskraftmaschine bekannt, welche ein regenerierbares Filtersystem zur Abscheidung von Partikeln aus dem Abgas, bei dem mindestens drei Filterelemente in einem Gehäuse angeordnet sind, umfaßt. Die mit Partikeln beladenen Filterelemente sind zur Regeneration mit sauerstoffhaltigem Abgas durchströmbar, wobei das Abgas auf eine Temperatur erhitzt ist, die zumindest so hoch ist wie die Verbrennungstemperatur der Partikel. Der Werkstoff des Filterelements ist in bezug auf die Einwirkung des Regenerationsgases beständig. Während der bestimmungsgemäßen Verwendung der Vorrichtung sind die mindestens drei Filterelemente durch Steuerorgane nacheinander getaktet derart ansteuerbar, daß zur Abscheidung von Partikeln zumindest eines der regenerierten Filterelemente nur vom Abgas und gleichzeitig zur Regeneration zumindest eines der partikelbeladenen Filterelemente nur vom aufgeheizten Abgas durchströmt ist. Nachteilig ist hier, daß eine Vielzahl von Steuerorganen erforderlich ist.

Aus der EP-A-0 283 240 ist eine weitere Vorrichtung zur Reinigung von Abgas bekannt, die nur zwei Filterelemente aufweist. Die beiden Filterelemente können abwechselnd regeneriert werden, wobei in einer neutralen Stellung beide Filterelemente vom Abgas durchströmt werden. Die verschiedenen Betriebszustände werden durch ein an der Einlaßseite angeordnetes Vierwegeventil eingestellt. Diese Vorrichtung hat den Nachteil, daß lediglich zwei Filterelemente verwendet werden können.

Eine ähnliche Vorrichtung ist aus der DE 43 14 238 A1 bekannt. Die Vorrichtung ist als Rußfilter zur Verwendung in einem Abgasstrom ausgebildet und umfaßt einen in einem Gehäuse enthaltenen Flächenfilter zur Abscheidung von Rußpartikeln. Der Flächenfilter ist zur Regeneration zyklisch entgegen der Durchtrittsrichtung des zu reinigenden Abgasstroms mit sauerstoffhaltigem Heißgas durchströmbar, wobei der Flächenfilter im wesentlichen zylindrisch ausgebildet und in Umfangsrichtung plissiert ist. Um eine große Filterfläche zu erhalten, weist der Flächenfilter eine Vielzahl von Falten auf, wobei der Flächenfilter konzentrisch um den Strömungseintritt angeordnet ist und sich die Falten in radialer Richtung vom Strömungseintritt bis nahezu zur außenumfangsseitigen Begrenzung des Gehäuses erstrecken. Eine Regeneration des Flächenfilters erfolgt jeweils faltenweise, wobei der Flächenfilter in Umfangsrichtung um seine Achse bewegbar ist.

Der Erfindung liegt die Aufgabe zugrunde, eine Vorrichtung der vorbekannten Art derart weiterzuentwickeln, daß Schwierigkeiten bezüglich der Abdichtung des Regenerationsraums gegenüber dem Filterraum minimiert sind und die mechanische Standfestigkeit verbessert wird.

Diese Aufgabe wird erfindungsgemäß mit den Merkmalen von Anspruch 1 gelöst. Auf vorteilhafte Ausgestaltungen nehmen die Unteransprüche Bezug.

Die Ansteuerbarkeit der einzelnen Filterelemente für eine partielle Regeneration wird durch die gezielte Zuführung der Gasströme in das Filtersystem ermöglicht. Bei den zu filternden Partikeln handelt es sich im wesentlichen um Rußpartikel. Die Verwendung mehrerer separat erzeugter Filterpatronen ist von Vorteil, da hier eine ausgezeichnete Abdichtung der Filterpatronen voneinander problemlos möglich ist. Jede Filterpatrone besteht aus einer Filterkerze, die von einem Gehäuse umschlossen ist. Die Abdichtung einzelner Filterelemente ist im Vergleich zur Abdichtung einzelner Falten von nur einer Filterpatrone wesentlich vereinfacht. Durch die erfindungsgemäße Ausgestaltung der Vorrichtung ist eine schrittweise, partielle Regeneration von voneinander getrennten Filterelementen weitgehend oder vollständig unabhängig vom physikalischen Zustand, beispielsweise dem Druck und der Temperatur und der chemischen Zusammensetzung des Abgases des während des Regenerationsvorganges im Betrieb befindlichen Verbrennungsmotors sicher durchzuführen. Gleichzeitig ist der Energieverbrauch für die Regenerationsvorgänge so weit wie möglich verringert, wobei außerdem unter sämtlichen im Betrieb denkbaren Bedingungen ein vollständiger Abbrand der gefilterten Partikel gewährleistet ist. Eine Überhitzung der Bauteile des Filters, insbesondere der Filteroberfläche wird zuverlässig vermieden. Eine Gefahr einer lokalen Überhitzung des Filters, die zu Rissen, Löchern oder sonstigen Undichtigkeiten im Filterkörper führen kann oder zu Verstopfungen oder Verschmelzungen des Filters, sind sicher ausgeschlossen.

Hinsichtlich einer möglichst großen Filterfläche und einer daraus resultierenden möglichst guten Filterwirkung, ist vorgesehen, daß das Filtersystem zumindest drei Filterelemente aufweist, die jeweils in einem zylinderförmigen Gehäuse gleichmäßig in Umfangsrichtung verteilt angeordnet sind. Vorteilhafterweise ist nur eines der Filterelemente vom Regenerationsgas und sind die benachbart in Umfangsrichtung angrenzenden Filterelemente gleichzeitig vom Abgas parallel durchströmt.Bevorzugt weist das Filtersystem sechs Filterelemente auf. Eine derartige Anzahl von Filterelementen hat sich hinsichtlich der Optimierung der Vorrichtung bezüglich der Baugröße und der Filterwirkung als vorteilhaft bewährt. Während das zu filternde Abgas durch die fünf einander benachbart in Umfangsrichtung angeordneten Filterelemente strömt und die im Abgas enthaltenen Partikel aus dem Abgas gefiltert werden, wird das bereits mit Partikeln beladene Filterelement gleichzeitig regeneriert, wobei die auf der Filteroberfläche angelagerten Partikeln vollständig abgebrannt werden. Bei der erfindungsgemäßen Vorrichtung ist von Vorteil, daß die als Filterkerzen ausgebildeten Filterelemente relativ zum Gehäuse ortsfest und unbeweglich angeordnet sind. Die Abdichtung der einzelnen Filterelemente gegeneinander ist problemlos. Die getaktete Ansteuerung der einzelnen Filterelemente erfolgt durch ein Steuerorgan, das relativ beweglich zum Gehäuse und zu den Filterelementen angeordnet ist.

Das Steuerorgan ist durch jeweils einen Drehschieber gebildet, die im Bereich der stirnseitigen Begrenzungen der Gehäuse angeordnet sind und einen Bestandteil jeweils eines Verteilerstücks bilden, wobei die Verteilerstücke den Filterelementen in Strömungsrichtung des Abgases vor- und nachgeschaltet und an die Gehäuse anflanschbar sind. Die Drehschieber bewirken eine strömungsmechanische Abtrennung des zu regenerierenden Filterelements durch das Abdecken des Zu- bzw. Abströmkanals im Verteilerstück zu den Filterelementen mittels einer Absperr- bzw. Drosselfläche. Die Steuerorgane im Bereich der stirnseitigen Begrenzungen der Gehäuse können beispielsweise durch ein Gestänge funktionstechnisch miteinander verbunden sein, so daß die Ansteuerung eines Drehschiebers ausreicht, beide Drehschieber zu betätigen. Drehschieber weisen einen relativ einfachen Aufbau auf und können während einer langen Gebrauchsdauer sicher abgedichtet werden. Die Drehschieber weisen bevorzugt eine in Strömungsrichtung kegelige Form auf und sind bevorzugt durch eine Federvorspannung in einen ebenfalls kegelförmig gestalteten Ventilsitz rotationsbeweglich angepreßt.

Eine ausgezeichnete Anpassung der Vorrichtung an den jeweiligen Betriebszustand der angeschlossenen Verbrennungskraftmaschine kann dadurch erreicht werden, daß das Steuerorgan einen elektrisch betätigbaren Antrieb aufweist, der signalleitend mit einer elektronischen Motorsteuerung der Verbrennungskraftmaschine verbunden ist. Mechanische, pneumatische oder hydraulische Antriebe des Steuerorgans sind ebenfalls denkbar. Elektrisch betätigbare Antriebe ermöglichen eine exakte Positionierung des Drehschiebers innerhalb des Verteilerstücks und dadurch eine exakte Einstellbarkeit der Zu- und Abströmquerschnitte der einzelnen Filterelemente. Durch den mit der Motorsteuerung gekoppelten elektrischen Antrieb besteht die Möglichkeit, die Taktfequenz der Regeneration zumindest eines der Filterelemente, beispielsweise bei Vollast der Verbrennungskraftmaschine, wenn verstärkt Rußpartikel im Abgas enthalten sind, entsprechend zu erhöhen.

Gemäß einer vorteilhaften Ausgestaltung bestehen die Filterelemente aus einem Metallvlies. Bevorzugt gelangt nichtrostender Edelstahl zur Anwendung, so daß die Filterelemente einerseits sicher vor Korrosion geschützt sind und andererseits hohen Temperaturbelastungen während des Betriebs standhalten. Im Bereich der Dichtungsstellen zwischen dem Drehschieber und den Verteilerstücken gelangen Dichtungen aus bevorzugt keramischen Materialien zur Anwendung, die auch in Temperaturbereichen oberhalb von 500°C während einer langen Gebrauchsdauer sicher abdichten.

Zur Vergrößerung der Filterfläche sind die einzelnen Filterelemente in Umfangsrichtung plissiert.

Nach einer ersten Ausgestaltung kann der Regenerationsgasstrom in Richtung der Beladungsrichtung der Partikeln durch das Filterelement geführt sein. Hierbei ist von Vorteil, daß die Zuführung des Regenerationsgasstroms zu den Filterelementen vereinfacht ist.

Nach einer anderen Ausgestaltung besteht die Möglichkeit, daß der Regenerationsgasstrom entgegen der Beladungsrichtung durch das Filterelement geführt ist. Hierbei ist von Vorteil, daß das Filterelement einer geringeren thermischen Belastung ausgesetzt ist und daß sich beim Durchtritt des Regenerationsgasstroms durch das Filtermaterial ein Freiblaseffekt der nicht regenerierbaren Partikeln aus dem Abgas von der Oberfläche des Filters ergibt. Der Freiblaseffekt wird durch eine impulsartige Druckbeaufschlagung bewirkt. Im Anschluß an die Regeneration ist daher eine ausgezeichnete Filterwirksamkeit des Filterelements gegeben.

Das Regenerationsgas ist bevorzugt durch eine elektrische Heizeinrichtung erwärmbar. Das Regenerationsgas muß dabei eine Temperatur haben, die zumindest der Verbrennungstemperatur insbesondere der auf oder im Filter abgelagerten Rußpartikel entspricht.

Bevorzugt ist die elektrische Heizeinrichtung durch den Werkstoff des Filterelements selbst gebildet, der als elektrischer Leiter ausgebildet ist. Die Regelung der elektrischen Heizleistung während der Regeneration wird durch den ohm'schen Widerstand des Heizelements realisiert. Der ebenfalls möglichen Vorschaltung sekundärer elektrisch beheizbarer Heizelemente vor den Filter bedarf es in diesem Fall nicht.

Die Filterelemente können mit einer katalytischen Oberflächenbeschichtung versehen sein. Die für die Oxydation der Partikelbeladung auf dem Filterelement notwendige Reaktionstemperatur kann durch eine katalytische Beschichtung des Filtermaterials abgesenkt werden. Die Gebrauchsdauer der erfindungsgemäßen Vorrichtung wird dadurch wesentlich erhöht. Außerdem wird durch die Beschichtung des Filtermediums mit katalytisch wirksamen Substanzen die Stickoxyd konzentration im Abgas verringert. Der Regenerationsgasstrom kann im Anschluß an die Regeneration in das Abgasrohr der Verbrennungskraftmaschine einspeisbar sein. Hierbei sind emissionsmindernde Effekte von Vorteil, insbesondere die Verbrennung von Kohlenmonoxyd. Die Regeneration des Filterelements oder die Reduktion bzw. Oxydation der Schadstoffe kann durch die Zuführung von chemisch oder katalytisch wirksamen Medien bzw. Substanzen unterstützt werden.

Nach einer anderen Ausgestaltung kann der Regenerationsgasstrom im Anschluß an die Regeneration im zu reinigenden Abgas in Strömungsrichtung vor dem Filterelement oder dem gereinigten Abgas in Strömungsrichtung hinter dem Filtersystem zuführbar sein.

Zwei Ausführungsbeispiele der erfindungsgemäßen Vorrichtung werden nachfolgend anhand der Zeichnungen weiter verdeutlicht. Diese zeigen in schematischer Darstellung:

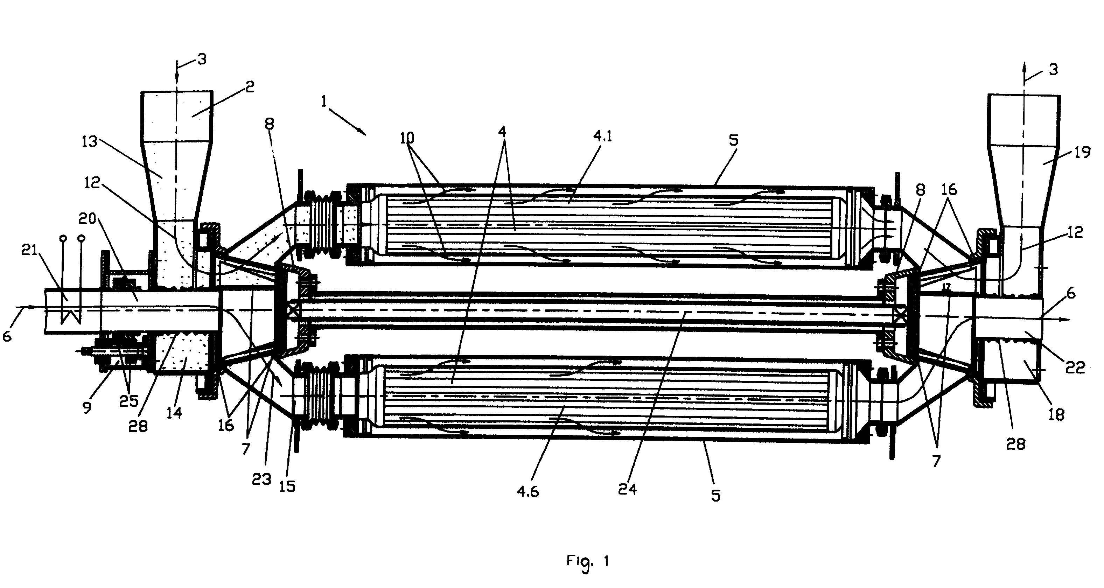

Fig. 1 eine Schnittzeichnung eines ersten Ausführungsbeispiels, bei dem die Filterelemente als Filterkerzen ausgebildet sind und von innen nach außen mit Abgas durchströmt werden und der Regenerationsgasstrom in gleicher Richtung, d. h. in Richtung der Beladung des Filterelements mit den Partikeln geführt wird.

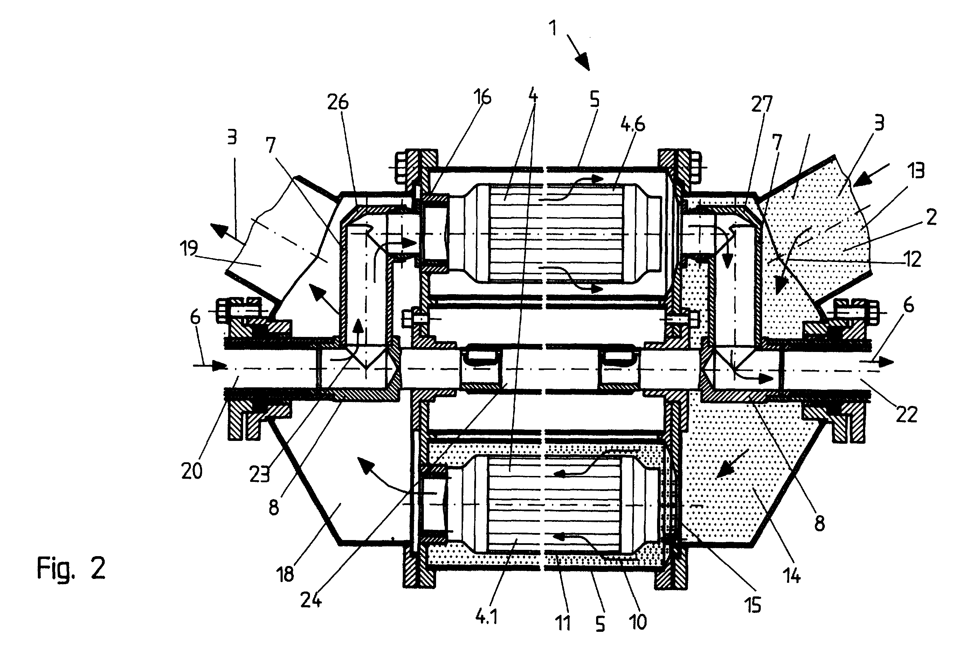

Fig. 2 ein zweites Ausführungsbeispiel der erfindungsgemäßen Vorrichtung, bei dem eine alternative Absperrung des zu regenerierenden Filterelements vom Abgasstrom und eine entsprechende Zufuhr des Regenerationsgases bei einer Regenerationsgasdurchströmung entgegen der Partikelbeladungsrichtung realisiert ist.

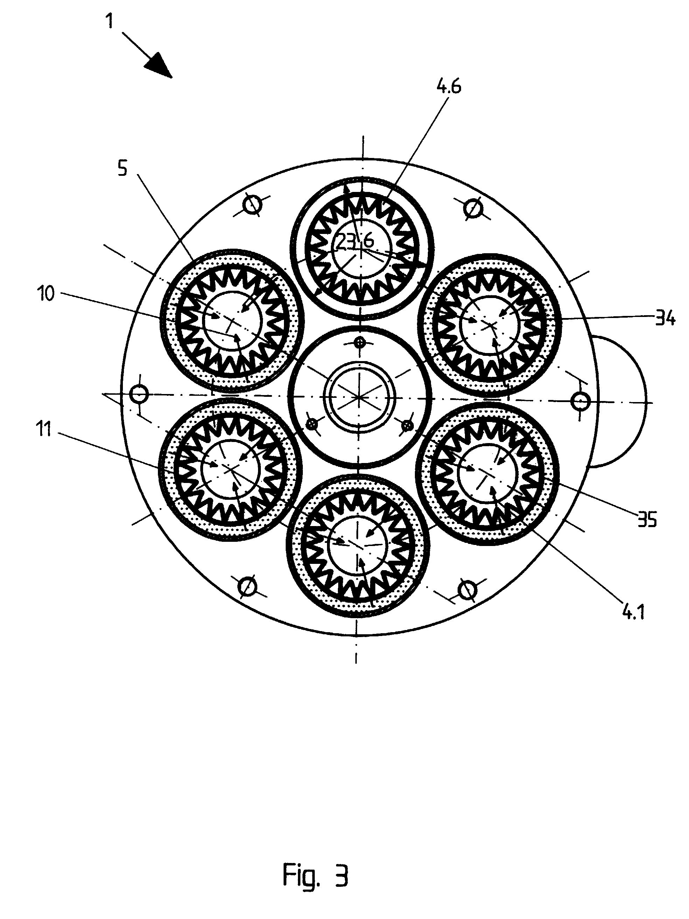

Fig. 3 einen Querschnitt durch die Vorrichtung aus Fig. 2.

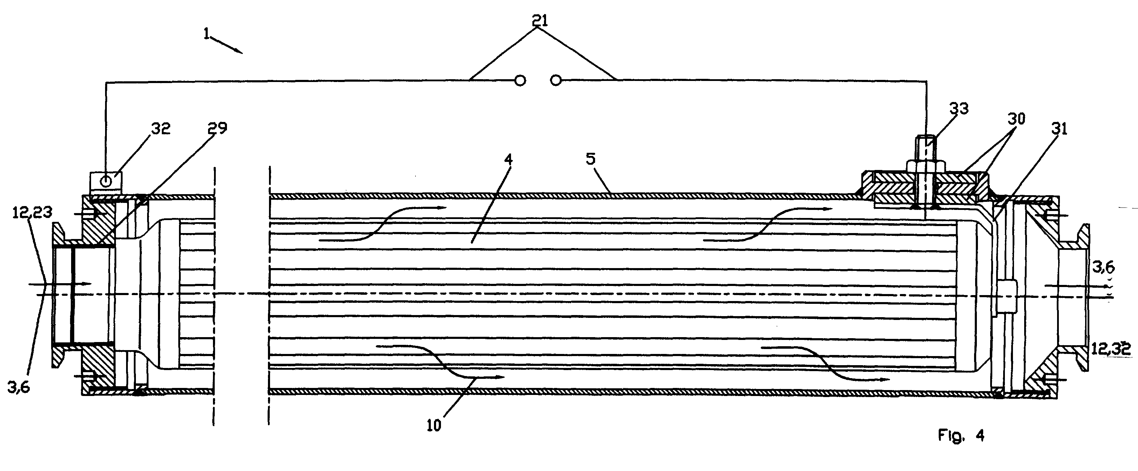

Fig. 4 einen Schnitt durch ein Filterelement, das als Filterkerze ausgebildet und von einem Gehäuse umschlossen ist, wobei die Filterkerze elektrisch isoliert aufgehängt ist, so daß durch das Anlegen einer elektrischen Spannung an die Anschlußklemmen das Filtermaterial durch ohm'sche Erwärmung bedarfsweise beheizt werden kann.

In Fig. 1 ist ein erstes Ausführungsbeispiel der erfindungsgemäßen Vorrichtung zur Reinigung von Abgas einer gemischverdichtenden Diesel-Verbrennungskraftmaschine in geschnittener Darstellung gezeigt. Die Vorrichtung umfaßt ein regenerierbares Filtersystem 1 zur Abscheidung von Partikeln 2, die überwiegend aus Rußpartikeln bestehen und einen Bestandteil des Abgases 3 bilden. Im hier dargestellten Ausführungsbeispiel sind sechs Filterelemente 4.1, ..., 4.6 vorgesehen, die jeweils als Filterkerzen ausgebildet und von jeweils einem Gehäuse 5 umschlossen sind. Zur Regeneration der mit den Partikeln 2 beladenen Filterelemente 4.1, ..., 4,6 sind diese nacheinander von sauerstoffhaltigem Regenerationsgas 6 durchströmbar, wobei das Regenerationsgas 6 eine Temperatur aufweist, die zumindest so hoch ist, wie die Verbrennungstemperatur der Partikel 2. Zur Abscheidung der Partikel 2 aus dem Abgas 3 sind fünf einander in Umfangsrichtung benachbarte Filterelement 4.1, ..., 4,5 vorgesehen, die jeweils nur vom zu reinigenden Abgas 3 durchströmt sind, während gleichzeitig das partikelbeladene Filterelement 4.6 vom Regenerationsgas 6 durchströmt ist. Das von der Verbrennungskraftmaschine ausgestoßene Abgas 3 wird über den Eintrittsstutzen 13 in einen dem als Drehschieber ausgebildeten Steuerorgan 7 vorgelagerten Ringraum 14 geleitet. In diesem Ringraum 14 wird das Abgas 3 gleichmäßig auf die in diesem Fall fünf mit den Filtereiementen 4.1, ...., 4.5 verbundenen Zuströmstutzen 15 aufgeteilt. Der Drehschieber trennt den Abgasstrom zu den fünf mit Abgas 3 beaufschlagten Filterelementen 4.1, .... 4,5 von dem sechsten Filterelement 4.6, das seinerseits mittels des Drehschiebers mit dem von der Regenerationsgasversorgung bereitgestellten Regenerationsgas 6 beaufschlagt ist. Die beiden Steuerorgane 7, die jeweils als Drehschieber ausgebildet sind und im Bereich der stirnseitigen Begrenzungen der sechs gleichmäßig in Umfangsrichtung verteilten Gehäuse 5 angeordnet sind, besitzen im vorliegenden Fall eine konische Dichtfläche, die die Gasströme über einen Dichtungseinsatz 16 zum Verteilergehäuse 8 hin dichtet. Das Verteilergehäuse 8 bildet das Drehschiebergehäuse. Die Drehschieber werden über eine Schraubenfeder in den Dichtungseinsatz 16 gedrückt. Das den Filterelementen 4.1, ..., 4.5 über die Zuströmstutzen 15 zugeführte Abgas 3 durchströmt die Filterelement 4.1, ..., 4.5 von innen nach außen, wobei sich ein wesentlicher Teil der Partikel 2 auf der Oberfläche der Filterelemente 4.1, ..., 4.5 anlagert. Das gefilterte Abgas 3 strömt über den Zwischenraum zwischen der äußeren Oberfläche des jeweiligen Filterelements 4.1,..., 4.6, den jeweiligen Abströmstutzen, die Abströmseite 17 des Drehschiebers und den Ringraum zum Sammeln des gefilterten Abgases 3 und den Abgasstutzen 19 ab. Zur Regeneration des mit der Regenerationsgasversorgung gekoppelten Filterelements 4.6 wird über den Regenerationsgaszuführstutzen 20 das Regenerationsgas 6 mit definierter Temperatur und abgestimmtem Sauerstoffgehalt zugeführt. Das Regenerationsgas 6 wird entweder über eine Beheizungseinrichtung 21 auf die erforderliche Zündtemperatur der Partikel 2 aufgeheizt oder aber die erforderliche Reaktionswärme am Filterelement 4.6 wird durch die direkte Beheizung des Filtermaterials mittels ohm'scher Erwärmung des elektrisch durchströmten Filterelements 4.6 realisiert. Das das Filterelement 4.6 verlassende Reaktionsgas 6 kann entweder unter Verzicht auf den abströmseitigen Drehschieber direkt dem gefilterten Abgas 3 zugeführt werden oder aber getrennt über den Reaktionsgasabführstutzen 22 der Ansaugluft der Verbrennungskraftmaschine oder dem Abgas 3 der Verbrennungskraftmaschine vor dem Filtersystem 1 zugeführt werden. Sowohl die Strömungsrichtung 12 des Abgases 3 durch die Filterelement 4.1, ..., 4,6 als auch die Strömungsrichtung 23 des Regenerationsgases durch das zu regenerierende Filterelement 4.6 können je nach Anforderung an das Filtersystem 1 auch umgekehrt werden. Die Bewegung der beiden Drehschieber sind im vorliegenden Fall über eine drehmomentübertragende Stange 24 in ihrer Bewegung gekoppelt. Als Antrieb 9 für die Umschaltung der Drehschieber auf die Regenerationsstellung für die im kontinuierlichen Filterprozeß folgende nächste zu regenerierende Filterkerze dient im dargestellten Fall ein von einem elektrischen Antrieb 9 angetriebenes Untersetzungsgetriebe 25. In Verbindung mit der Bewegung der Drehschieber in die gewünschte Stellung des jeweils zu regenerierenden Filterelements 4.6 ist es zweckmäßig, die mechanische Schaltung der elektrischen Kontakte der elektrischen Stromzufuhr für die elektrische Beheizung des zu regenerierenden Filterelements 4.6 mechanisch an die Bewegung der Drehschieber zu koppeln.

In Fig. 2 ist ein zweites Ausführungsbeispiel der erfindungsgemäßen Vorrichtung gezeigt, bei der die Filterelemente 4.1, ... 4.6 während der Beladung von außen nach innen durchströmt werden, so daß sich die Partikel 2 im wesentlichen an der äußeren Oberfläche bzw. im oberflächennahen Bereich des Filtermaterials anlagern. Demgegenüber wird das Filterelement 4.6 während des Regenerationsvorgangs von innen nach außen durchströmt. Das Regenerationsgas 6 für die im Regenerationszustand befindliche Filterkerze 4.6 wird in diesem Fall über einen im Ringraum 14 angeordneten, um die Symmetrieachse des Filtersystems 1 schwenkbaren ersten Rüssel 26 zugeführt und - sofern notwendig - wie dargestellt durch einen entsprechend ausgebildeten zweiten Rüssel 27 abgeführt. Die beiden Rüssel 26, 27 werden axial beispielsweise über eine entsprechende Schraubenfeder 28 und ein gegebenenfalls winkeleinstellbares Dichtelement 36 unter Vorspannung an die entsprechenden Dichtflächen des Gehäuses 5 angedrückt.

Fig. 3 zeigt einen Schnitt durch die Vorrichtung gemäß Fig. 2. Fünf der sechs Filterelemente 4.1,..., 4.5 des Filtersystems 1 sind in Beladestellung von außen nach innen durchströmt, während das sechste Filterelement 4.6 für die Dauer der Beladung von innen nach außen durchströmt wird. Die Filterelemente 4.1, ...,4.6 sind zur Vergrößerung der Filteroberfläche bei vorhandenem Bauraum mit einer Plissierung versehen, die sich in Umfangsrichtung erstreckt.

Fig. 4 zeigt einen Schnitt durch eines der Gehäuse 5 und ein in das Gehäuse 5 eingebautes Filterelement 4.1, ...., 4.6. Das Filterelement 4.1, ...., 4,6 ist auf der linken Seite der Darstellung mittels eines Einschraubgewindes 29 elektrisch mit der Anschlußklemme des Gehäuses 5 verbunden. Auf der rechten Seite wird das Filterelement 4.1, ..., 4.6 durch einen mittels Isolierscheiben 30 elektrisch isolierten Halter 31 in Gehäuse 5 befestigt. Der Werkstoff der Filterelement 4.1, ..., 4,6, der aus einem elektrisch leitfähigem Metallvlies besteht, kann durch das Anlegen einer elektrischen Spannung zwischen den Klemmen 32, 33 zur Regeneration der Partikel 2 auf die erforderliche Temperatur aufgeheizt werden. Um eine radiale Bewegung des plissierten Filtermaterials oder ein Einbauchen des nicht-plissierten Filtermaterials unter der Wirkung von Druckdifferenzen zwischen Innen- und Außenseite des Filterelements 4.1, ..., 4,6 zu verhindern, ist es möglich, das Filterelement 4.1, ..., 4,6 gegebenenfalls innen und außen mit einem Stützrohr 34, 35 bzw. Stützkörper aus beispielsweise geschlitztem oder gelochtem Blech zu versehen. Dieser Stützkörper ist gegebenenfalls zur Unterstützung der Schadstoffreduzierung im Abgas mit einer katalytisch wirksamen oxydierend und/oder reduzierend wirksamen Beschichtung versehen. Eine entsprechende Schutzfunktion kann dabei ein schraubenförmig um den Innen- oder Außendurchmesser gewundener Draht erfüllen.

## Patentansprüche

1. Vorrichtung zur Reinigung von Abgas einer gemischverdichtenden Verbrennungskraftmaschine, umfassend ein regenerierbares Filtersystem (1) zur Abscheidung von Partikeln (2) aus dem Abgas (3), bei dem zumindest ein Filterelement (4) in einem Gehäuse (5) angeordnet ist und das mit Partikeln (2) beladene Filterelement (4) zur Regeneration mit sauerstoffhaltigem Regenerationsgas (6) durchströmbar ist, wobei das Regenerationsgas (6) eine Temperatur aufweist, die zumindest so hoch ist, wie die Verbrennungstemperatur der Partikel (2) und wobei der Werkstoff des Filterelements (4) in bezug auf die Einwirkung des Regenerationsgases (6) beständig ist, wobei das Filtersystem (1) zumindest drei Filterelemente (4.1, ...) aufweist, die jeweils in einem zylinderförmigen Gehäuse (5) gleichmäßig in Umfangsrichtung verteilt angeordnet sind und die während der bestimmungsgemäßen Verwendung der Vorrichtung durch zumindest ein Steuerorgan (7) nacheinander getaktet ansteuerbar sind, derart, daß zur Abscheidung von Partikeln (2) zumindest eines der regenerierten Filterelemente (4.1) nur vom Abgas und gleichzeitig zur Regeneration zumindest eines der partikelbeladenen Filterelemente (4.2) nur vom Regenerationsgas (6) durchströmt ist, **dadurch gekennzeichnet, daß** das Steuerorgan (7) durch jeweils einen Drehschieber gebildet ist, daß die Drehschieber im Bereich der stirnseitigen Begrenzungen des Gehäuses (5) angeordnet sind und einen Bestandteil jeweils eines Verteilerstücks (8) bilden und daß die Verteilerstücke (8) den Filterelementen (4.1, .... 4.6) in Strömungsrichtung (9) des Abgases vor- und nachgeschaltet und an die Gehäuse (5) anflanschbar sind.

2. Vorrichtung nach Anspruch 1, dadurch gekennzeichnet, daß das Filtersystem (1) sechs Filterelemente (4.1,..., 4.6) aufweist.

3. Vorrichtung nach Anspruch 1 oder 2, dadurch gekennzeichnet, daß das Steuerorgan (7) einen elektrisch betätigbaren Antrieb (9) aufweist, der signalleitend mit einer elektronischen Motorsteuerung der Verbrennungskraftmaschine verbunden ist.

4. Vorrichtung nach einem der Ansprüche 1 bis 3, dadurch gekennzeichnet, daß die Filterelemente (4.1, ..., 4.6) aus einem Metallvlies bestehen.

5. Vorrichtung nach einem der Ansprüche 1 bis 4, dadurch gekennzeichnet, daß die Filterelemente (4.1, ..., 4.6) in Umfangsrichtung plissiert sind.

6. Vorrichtung nach einem der Ansprüche 1 bis 5, dadurch gekennzeichnet, daß der Regenerationsgasstrom (6) in Richtung der Beladungsrichtung (10) der Partikel (2) durch das Filterelement (4.1, ..., 4.6) geführt ist.

7. Vorrichtung nach einem der Ansprüche 1 bis 5, dadurch gekennzeichnet, daß der Regenerationsgasstrom (6) entgegen der Beladungsrichtung (10) durch das Filterelement (4.1, ..., 4.6) geführt ist.

8. Vorrichtung nach einem der Ansprüche 1 bis 7, dadurch gekennzeichnet, daß das Regenerationsgas (6) durch eine elektrische Heizeinrichtung erwärmbar ist.

9. Vorrichtung nach Anspruch 8, dadurch gekennzeichnet, daß die elektrische Heizeinrichtung durch den Werkstoff des Filterelements (4.1, .... 4.6) selbst gebildet ist, der als elektrischer Leiter ausgebildet ist.

10. Vorrichtung nach einem der Ansprüche 1 bis 9, dadurch gekennzeichnet, daß die Filterelemente (4.1, ..., 4.6) mit einer katalytischen Oberflächenbeschichtung (11) versehen sind.

11. Vorrichtung nach einem der Ansprüche 1 bis 10, dadurch gekennzeichnet, daß der Regenerationsgasstrom (6) im Anschluß an die Regeneration in das Ansaugrohr der Verbrennungskraftmaschine einspeisbar ist.

12. Vorrichtung nach einem der Anspruche 1 bis 10, dadurch gekennzeichnet, daß der Regenerationsgasstrom (6) im Anschluß an die Regeneration dem zu reinigenden Abgas (3) in Strömungsrichtung (12) vor dem Fillersystem (1) oder dem gereinigten Abgas (3) in Strömungsrichtung (12) hinter dem Filtersystem (1) zuführbar ist.

## Claims

1. A device for the purification of exhaust gas from a mixture-compressing internal combustion engine, comprising a regenerable filter system (1) for the separation of particles (2) from the exhaust gas (3), in which at least one filter element (4) is arranged in a housing (5) and oxygenous regenerating gas (6) is capable of flowing, for regeneration, through the filter element (4) laden with particles (2), the regenerating gas (6) being at a temperature which is at least as high as the combustion temperature of the particles (2), and the material of the filter elements (4) being resistant to the action of the regenerating gas (6), the filter system (1) having at least three filter elements (4.1,...) which are in each case arranged, distributed uniformly in the circumferential direction, in a cylindrical housing (5), and which, during the intended use of the device, can be activated periodically in succession by means of at least one control member (7), in such a way that, for the separation of particles (2), only the exhaust gas flows through at least one of the regenerated filter elements (4.1) and simultaneously, for regeneration, only the regenerating gas (6) flows through at least one of the particle-laden filter elements (4.2), characterized in that the control member (7) is formed in each case of a rotary slide, in that the rotary slides are arranged in the region of the end-face limitations of the housing (5) and in each case form an integral part of a distributor piece (8), and in that the distributor pieces (8) are connected upstream and downstream of the filter elements (4.1, ..., 4.6) in the direction of flow (9) of the exhaust gas and can be flanged to the housing (5).

2. A device according to claim 1, characterized in that the filter system (1) has six filter elements (4.1, ..., 4.6).

3. A device according to claim 1 or 2, characterized in that the control member (7) has an electrically actuable drive (9) which is connected in a signal-conducting manner to an electronic engine control of the internal combustion engine.

4. A device according to one of claims 1 to 3, characterized in that the filter elements (4.1, ..., 4.6) consist of a metal nonwoven.

5. A device according to one of claims 1 to 4, characterized in that the filter elements (4.1, ..., 4.6) are pleated in the circumferential direction.

6. A device according to one of claims 1 to 5, characterized in that the regenerating gas stream (6) is led in the same direction as the direction (10) in which the filter element (4.1, ..., 4.6) is loaded with the particles (2).

7. A device according to one of claims 1 to 5, characterized in that the regenerating gas stream (6) is led through the filter element (4.1, ..., 4.6) counter to the loading direction (10).

8. A device according to one of claims 1 to 7, characterized in that the regenerating gas (6) can be heated by an electrical heating means.

9. A device according to claim 8, characterized in that the electrical heating means is formed by the material of the filter element (4.1, ..., 4.6) itself, the said material being designed as an electrical conductor.

10. A device according to one of claims 1 to 9 , characterized in that the filter elements (4.1, ..., 4.6) are provided with a catalytic surface coating (11).

11. A device according to one of claims 1 to 10, characterized in that, after regeneration, the regenerating gas stream (6) can be fed into the intake pipe of the internal combustion engine.

12. A device according to one of claims 1 to 10, characterized in that, after regeneration, the regenerating gas stream (6) can be supplied to the exhaust gas (3) to be purified, upstream of the filter system (1) in the direction of flow (12), or to the purified exhaust gas (3), downstream of the filter system (1) in the direction of flow (12).

## Revendications

1. Dispositif de purification des gaz d'échappement d'un moteur à combustion interne à compression du mélange, comprenant un système de filtrage (1) pouvant être régénéré servant à séparer les particules (2) des gaz d'échappement (3), dans lequel au moins un élément filtrant (4) est situé dans un boîtier (5) et l'élément filtrant (4) chargé en particules (2) peut être traversé par un gaz de régénération (6) contenant de l'oxygène en vue de sa régénération, le gaz de régénération (6) ayant une température au moins égale à la température de combustion des particules (2) et le matériau de l'élément filtrant (4) étant résistant par rapport à l'action du gaz de régénération (6), le système de filtrage (1) comprenant au moins trois éléments filtrants (4.1, ...) situés chacun dans un boîtier cylindrique (5) et répartis de manière uniforme dans la direction circonférentielle, et qui peuvent être commandés les uns après les autres de manière synchronisée par au moins un organe de commande (7) pendant l'utilisation conforme aux prescriptions du dispositif, de manière à ce qu'au moins un des éléments filtrants (4.1) régénérés soit traversé seulement par les gaz d'échappement afin de séparer les particules (2) et que, simultanément, au moins un des éléments filtrants (4.2) chargés en particules soit traversé seulement par le gaz de régénération (6) en vue de la régénération, caractérisé en ce que l'organe de commande (7) est formé, à chaque fois, par un tiroir rotatif, en ce que les tiroirs rotatifs sont situés dans la zone des limites frontales du boîtier (5) et forment, respectivement, une partie d'un élément distributeur (8), et en ce que les éléments distributeurs (8) sont situés avant et après les éléments filtrants (4.1, ..., 4.6) dans la direction d'écoulement (9) des gaz d'échappement et peuvent être fixés par bride sur les boîtiers (5).

2. Dispositif selon la revendication 1, caractérisé en ce que le système de filtrage (1) comprend six éléments filtrants (4.1,..., 4.6).

3. Dispositif selon l'une des revendications 1 ou 2, caractérisé en ce que l'organe de commande (7) comprend une commande (9) à actionnement électrique qui est reliée à une commande de moteur électronique du moteur à combustion interne par une liaison de signalisation.

4. Dispositif selon l'une des revendications 1 à 3, caractérisé en ce que les éléments filtrants (4.1,..., 4.6) sont formés d'un non-tissé métallique.

5. Dispositif selon l'une des revendications 1 à 4, caractérisé en ce que les éléments filtrants (4.1, ..., 4.6) sont plissés dans la direction circonférentielle.

6. Dispositif selon l'une des revendications 1 à 5, caractérisé en ce que le courant de gaz de régénération (6) traverse l'élément filtrant (4.1,..., 4.6) dans le sens correspondant à la direction de chargement (10) des particules (2).

7. Dispositif selon l'une des revendications 1 à 5, caractérisé en ce que le courant de gaz de régénération (6) traverse l'élément filtrant (4.1,..., 4.6) dans le sens contraire à la direction de chargement (10).

8. Dispositif selon l'une des revendications 1 à 7, caractérisé en ce que le gaz de régénération (6) peut être chauffé par un dispositif de chauffage électrique.

9. Dispositif selon la revendication 8, caractérisé en ce que le dispositif de chauffage électrique est formé par le matériau de l'élément filtrant (4.1, ..., 4.6) lui-même qui est exécuté en tant que conducteur électrique.

10. Dispositif selon l'une des revendications 1 à 11, caractérisé en ce que les éléments filtrants (4.1, ..., 4.6) sont pourvus d'une couche superficielle catalytique (11).

11. Dispositif selon l'une des revendications 1 à 10, caractérisé en ce que le courant de gaz de régénération (6) peut être alimenté dans la tubulure d'admission du moteur à combustion interne après la régénération.

12. Dispositif selon l'une des revendications 1 à 10, caractérisé en ce que le courant de gaz de régénération (6) peut, suite à la régénération, être amené aux gaz d'échappement (3) à purifier dans la direction d'écoulement (12) devant le système de filtrage (1) ou être amené aux gaz d'échappement (3) purifiés dans la direction d'écoulement (12) derrière le système de filtrage (1).
